# EUROPEAN PATENT SPECIFICATION

(11) **EP 3 527 930 B1**
(45) Date of publication and mention of the grant of the patent: **30.08.2023**
(21) Application number: 19157082.9
(22) Date of filing: 14.02.2019
(51) Int. Cl.: F42D 1/04

(54) **LOW ENERGY EXPLOSIVE TRANSFER ADAPTER**
NIEDRIGENERGIE-SPRENGSTOFFÜBERTRAGUNGSADAPTER
ADAPTATEUR DE TRANSFERT D'EXPLOSIF À FAIBLE ÉNERGIE

(30) Priority: 15.02.2018 US 201815897909
(43) Date of publication of application: 21.08.2019
(73) Proprietor: Goodrich Corporation, Charlotte, NC 28217-4578 (US)
(72) Inventor: WILSON, Brian, Vacaville, CA 95688 (US); CARVER, Patrick, Suisun City, CA 94585 (US); RAMIREZ, German, Antioch, CA 94531 (US)
(74) Representative: Dehns

(56) References cited:
- WO-A1-2010/099480
- US-A- 3 129 663
- US-A1- 2016 202 033

## Description

### FIELD OF THE DISCLOSURE

The present disclosure relates to low energy explosive transfer adapters and methods, and more particularly, to low energy explosive transfer adapters in aircraft egress systems.

### BACKGROUND OF THE DISCLOSURE

Modern aircraft egress systems typically utilize deflagrating input signals from low energy explosive transfer lines to directly ignite energetic materials in downstream components. However, input signals from low energy explosive transfer lines can often be inconsistent, affecting the performance of components receiving the input signal. US 3129663A describes fittings for a low energy detonating cord. Explosive transfer assemblies are disclosed by US 3 129 663 A, WO 2010/099480 A1 and US 2016/202033 A1.

### SUMMARY OF THE DISCLOSURE

An explosive transfer assembly is defined in claim 1.

The adapter housing may comprise an adapter aperture for receiving the shear pin configured to be inserted into a shear pin groove of the firing pin and position the firing pin in the firing pin chamber. The low energy explosive transfer adapter may be configured to be directly inserted into an existing explosive signal transfer system. The low energy explosive transfer adapter may be configured to generate a consistent output signal regardless of variability of an input signal provided by a low energy explosive transfer line. The shear pin is configured to mechanically fail at a threshold force.

The low energy input component comprises an input component housing comprising a first frusto-conical area, an input tube, a second frusto-conical area, a transition tube, and an open volume chamber. The low energy explosive transfer adapter comprises an adapter housing comprising a firing pin chamber comprising an inlet, a primer chamber extending from the firing pin chamber, and an output tube extending from the primer chamber. The first frusto-conical area, the input tube, the second frusto-conical area, and the transition tube are configured to receive a low energy explosive transfer line. The open volume chamber is configured to contain expanding gases resulting from the low energy explosive transfer line igniting. The firing pin chamber contains the firing pin. The firing pin is configured to impact a primer in the primer chamber. The primer is configured to ignite and transfer an explosive signal to the initiator component through the output tube. The low energy explosive transfer adapter comprises an adapter aperture for receiving the shear pin configured to be inserted into a shear pin groove of the firing pin and position the firing pin in the firing pin chamber. The low energy explosive transfer adapter may be configured to be threaded to the low energy input component and the initiator component.

A method of transferring a low energy explosive signal is defined in claim 9.

In various embodiments, the method may comprise igniting the low energy explosive transfer line and impacting a primer with the firing pin. The method may comprise placing an O-ring into an O-ring groove on the firing pin. The method may comprise inserting a primer into a primer chamber of the low energy explosive transfer adapter.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The accompanying drawings are included to provide a further understanding of the present disclosure and are incorporated in, and constitute a part of, this specification, illustrate various embodiments, and together with the description, serve to explain the principles of the disclosure.
FIG. 1 illustrates a cross-sectional view of a firing pin in accordance with various embodiments;
FIG. 2 illustrates a cross-sectional view of a low energy explosive transfer adapter in accordance with various embodiments;
FIG. 3 illustrates a cross-sectional view of a low energy explosive transfer adapter comprising a firing pin, an O-ring, and a shear pin in accordance with various embodiments;
FIG. 4 illustrates a cross-sectional view of a low energy explosive transfer adapter coupled to a low energy input component in accordance with various embodiments;
FIG. 5 illustrates a cross-sectional view of an explosive transfer assembly in accordance with various embodiments; and
FIG. 6 depicts a flowchart illustrating a method of transferring a low energy explosive signal in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, electrical, and mechanical changes may be made without departing from the spirit and scope of the disclosure. Thus, the detailed description herein is presented for purposes of illustration only and not of limitation.

For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

For example, in the context of the present disclosure, methods, systems, and articles may find particular use in connection with aircraft egress systems. However, various aspects of the disclosed embodiments may be adapted for optimized performance in a variety of other systems. As such, numerous applications of the present disclosure may be realized.

In various embodiments, it may be desired that a signal from a low energy explosive be transferred to a high energy explosive. Low energy explosives, at times, may experience inconsistent explosive and/or deflagrating input energies which may affect transfer of energy to the high energy explosive. Thus, in various embodiments, low energy explosive transfer systems are provided that may transfer a signal from a low energy explosive to a high energy explosive in a manner than tends to be consistent.

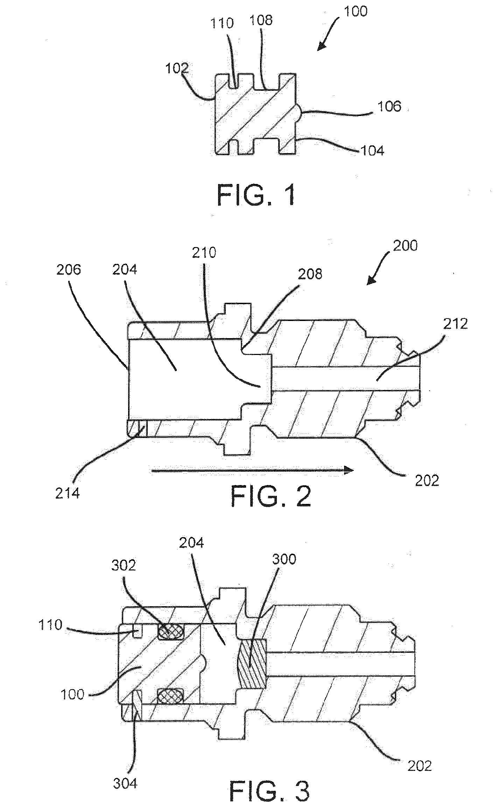

Referring to FIG. 1, a cross-sectional view of a firing pin 100 is depicted in accordance with various embodiments. Firing pin 100 may comprise a substantially cylinder shape and may be configured to be projected through firing pin chamber 204 (with momentary reference to FIG. 2). Firing pin 100 may comprise first face 102 and second face 104 opposite first face 102. Nub 106 may extend from second face 104 and be configured to impact a primer, such as primer 300 (with momentary reference to FIG. 3). Firing pin 100 may further comprise an O-ring groove 108 and a shear pin groove 110. Firing pin 100 may be made from various materials, including but not limited to, steel, aluminum, titanium, alloys of the aforementioned or other materials capable of withstanding impact with primer 300 (with momentary reference to FIG. 3) with limited deformation.

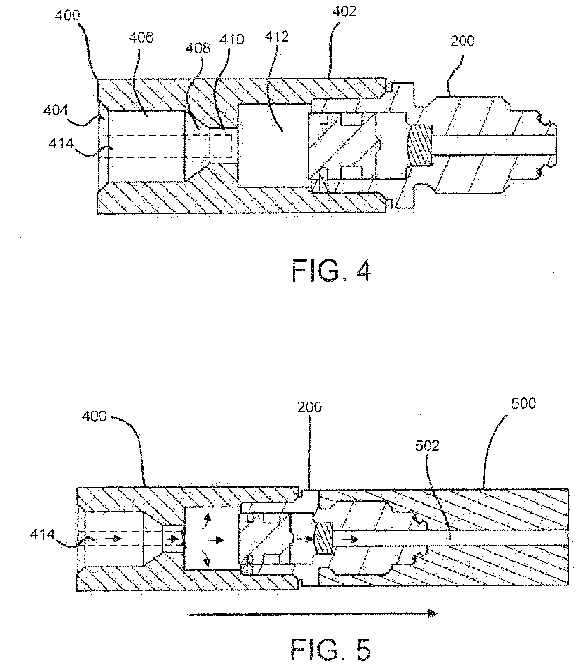

Referring to FIG. 2, a cross-sectional view of a low energy explosive transfer adapter 200 is depicted. Low energy explosive transfer adapter 200 may form a portion of an egress system for an aircraft, however, low energy explosive transfer adapter 200 is not limited in this regard. Low energy explosive transfer adapter 200 may be configured to transfer an explosive signal in the direction depicted by the arrow in FIG. 2. Low energy explosive transfer adapter 200 comprises an adapter housing 202. Adapter housing 202 comprises firing pin chamber 204 configured to contain firing pin 100. Firing pin chamber 204 comprises an inlet 206 and a stopping surface 208 opposite inlet 206. Stopping surface 208 may be configured to stop forward momentum of firing pin 100 in firing pin chamber 204. Adapter housing 202 further comprises a primer chamber 210 connected to firing pin chamber 204 and an output tube 212 connected to primer chamber 210. Primer chamber 210 is configured to contain a primer, such as primer 300, with additional reference to FIG. 3. Primer 300 may be in the form of a percussion primer, such as a percussion primer available under the trademark M42C1 from Olin Corporation, however, primer 300 is not limited in this regard. Adapter housing 202 may further comprise an adapter aperture 214 configured to receive shear pin 304. As will be discussed with reference to FIG. 3, low energy explosive transfer adapter 200 may be configured to be coupled to other components of the egress system. As a result, an exterior surface of adapter housing 202 may be at least partially threaded or otherwise designed for interfacing with other components, such as for example, low energy input component 400 (FIG. 4) and/or initiator component 500 (FIG. 5). Adapter housing 202 may comprise any material capable of withstanding pressure forces resulting from combusting gases in adapter housing 202 and impact of firing pin 100 on primer 300. For example, adapter housing 202 may comprise steel, aluminum, titanium, alloys of the aforementioned and/or other materials.

Referring to FIG. 3, low energy explosive transfer adapter 200 is configured to contain firing pin 100 in firing pin chamber 204 and primer 300 in primer chamber 210. Firing pin 100 may comprise an O-ring 302 situated within O-ring groove 108 and shear pin 304 extending through adapter aperture 214 and into shear pin groove 110. O-ring 302 may be configured to seal gases between primer 300 and firing pin 100 as firing pin 100 is projected in firing pin chamber 204. O-ring 302 may further guide firing pin 100 along an interior of firing pin chamber 204. Shear pin 304 is configured to position firing pin 100 in a predetermined position relative to firing pin chamber 204 and mechanically inhibit movement of firing pin 100 relative to adapter housing 202.

Referring to FIG. 4, a cross-sectional view of low energy explosive transfer adapter 200 is depicted coupled to low energy input component 400 in accordance with various embodiments. Low energy transfer adapter 200 may be coupled to low energy input component 400 in any manner. For example, low energy transfer adapter 200 may be threaded to low energy input component 400 by a threaded portion of an exterior surface of adapter housing 202. Low energy transfer adapter 200 may also be press fit, welded, brazed or otherwise coupled to low energy input component 400 such that expanding gases cannot escape between low energy explosive transfer adapter 200 and low energy input component 400. Low energy input component 400 comprises an input component housing 402 comprising first frusto-conical area 404, input tube 406, second frusto-conical area 408, transition tube 410, and open volume chamber 412. Input tube 406 is configured to receive and contain a low energy explosive transfer line 414 (indicated by the dashed lines). First frusto-conical area 404 and second frusto-conical area 408 may act as guides as the low energy explosive transfer line 414 is inserted into low energy input component 400. The low energy explosive transfer line 414 is configured to terminate in transition tube 410 and transfer expanding gases into open volume chamber 412 as the low energy explosive transfer line 414 deflagrates.

Referring to FIG. 5, a cross-sectional view of an explosive transfer assembly is depicted with low energy explosive transfer adapter 200 coupled to low energy input component 400 and an initiator component 500. Initiator component 500 comprises initiator component output 502 in fluid communication with output tube 212 of low energy transfer adapter 200. Low energy transfer adapter 200, low energy input component 400, and initiator component 500 may be configured such that low energy input component 400 and initiator component 500 do not include structural modification to be coupled with low energy transfer adapter 200. In other words, low energy transfer adapter 200 may be designed such that low energy transfer adapter 200 may be inserted between a preexisting connection between low energy input component 400 and initiator component 500. For example, low energy transfer adapter 200 may be threaded or otherwise coupled to low energy input component 400 and/or transfer adapter 200.

With further reference to FIG. 5, multiple arrows depict the transfer of an explosive signal through low energy input component 400, low energy explosive transfer adapter 200, and initiator component 500. Proceeding in the direction as indicated by the arrow, low energy explosive transfer line 414 is inserted into first frusto-conical area 404, input tube 406, second frusto-conical area 408, and terminates in transition tube 410. Firing pin 100 is positioned and mechanically constrained within firing pin chamber 204 by shear pin 304. Primer 300 may be positioned in primer chamber 210.

Upon ignition, low energy explosive transfer line 414 may deflagrate through first frusto-conical area 404, input tube 406, second frusto-conical area 408, and transition tube 410. Deflagration of the low energy explosive transfer line 414 in transition tube 410 may expel heated gases into open volume chamber 412. As the gases expand due to the temperature increase, pressure in open volume chamber 412 may increase and exert a force on first face 102 of firing pin 100. In turn, firing pin 100 may exert a shear force on shear pin 304. Upon reaching a threshold force (for example, approximately 35 lbf (~155 N) for a single-shear shear pin or 70 lbf (~310 N) for a double-shear shear pin), shear pin 304 may mechanically fail and firing pin 100 may be released. Pressure in open volume chamber 412 may project firing pin 100 toward primer 300 and nub 106 may impact primer 300. Momentum of firing pin 100 may be stopped by impact of second face 104 on stopping surface 208. Primer 300 may ignite as a result of the impact with nub 106, thereby transferring sparks through output tube 212 and initiator component output 502 to transfer an explosive signal to an output pyrotechnic material or high explosive device or the like.

As previously stated with reference to FIG. 5, low energy transfer adapter 200, low energy input component 400, and initiator component 500 may be configured such that low energy input component 400 and initiator component 500 do not include structural modification to be coupled with low energy transfer adapter 200. This allows low energy transfer adapter 200 to be directly inserted into existing explosive signal transfer systems, such as those in aircraft egress systems. Primers, such as primer 300, are known, in part, for their consistent output signals. In contrast, output signals of low energy explosive transfer lines can be inconsistent, resulting in variable performance of downstream components in the egress system. Accordingly, various embodiments of low energy transfer adapter 200 may increase consistency in explosive signal transfer systems utilizing low energy explosive inputs without the need for modification of existing components.

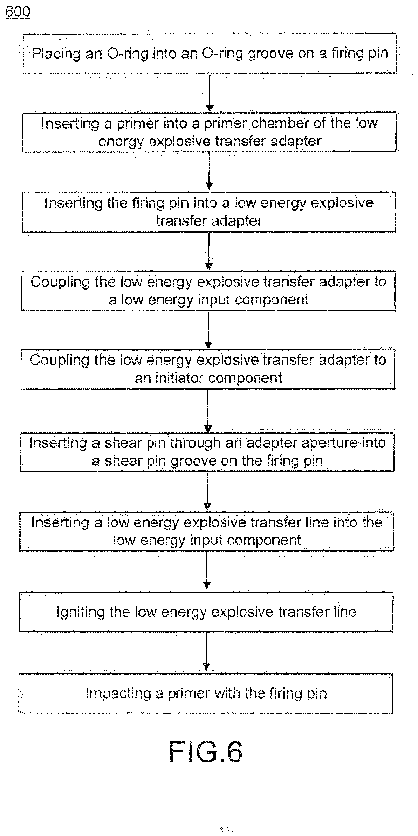

A block diagram illustrating a method 600 for transferring a low energy explosive signal is depicted in FIG. 6 in accordance with various embodiments. Method 600 may comprise placing an O-ring into an O-ring groove on a firing pin. The method may further comprise inserting a primer into a primer chamber of the low energy explosive transfer adapter. The method may further comprise inserting the firing pin into a low energy explosive transfer adapter. The method may further comprise coupling the low energy explosive transfer adapter to a low energy input component. The method may further comprise coupling the low energy explosive transfer adapter to an initiator component. The method may further comprise inserting a shear pin through an adapter aperture into a shear pin groove on the firing pin. The method may further comprise inserting a low energy explosive transfer line into the low energy input component. The method may further comprise igniting the low energy explosive transfer line. The method may further comprise impacting a primer with the firing pin. Method 600 is not limited in this regard. For example, method 600 may include more or less steps than the steps listed above or may perform the steps in a different order.

Benefits, other advantages, and solutions to problems have been described herein with regard to specific embodiments. Furthermore, the connecting lines shown in the various figures contained herein are intended to represent exemplary functional relationships and/or physical couplings between the various elements. The scope of the disclosure is accordingly to be limited by nothing other than the appended claims.

## Claims

1. An explosive transfer assembly, comprising:
a low energy explosive transfer adapter (200) comprising an adapter housing (202), that in turn comprises;
a firing pin chamber (204) situated within the adapter housing (202) comprising an inlet and a stopping surface (208) opposite the inlet (206);
a primer chamber (210) connected to the firing pin chamber (204); and
an output tube (212) connected to the primer chamber (210);
a firing pin (100) disposed within and fixed relative to the firing pin chamber (204) via a shear pin (304);
a primer (300) disposed within the primer chamber (210);
**characterized in that** the explosive transfer assembly further comprises:
a low energy input component (400) coupled with the low energy explosive transfer adapter (200), wherein the low energy input component (400) comprises an input component housing (402) comprising a first frusto-conical area (404) leading to an input tube (406), a second frusto-conical area (408) leading to a transition tube (410), and an open volume chamber (412), wherein the transition tube (410) is disposed between the input tube (406) and the open volume chamber (412), wherein an inner diameter of the input tube (406) is larger than an inner diameter of the transition tube (410), wherein an inner diameter of the open volume chamber (412) is larger than the inner diameter of the transition tube (410), and
wherein the open volume chamber (412) is disposed between the transition tube (410) and the firing pin (100); and
a low energy explosive transfer line (414) that extends through the input tube (406) and terminates within the transition tube (410) of the low energy input component (400);
an initiator component (500) coupled to the low energy explosive transfer adapter (200) and comprising an initiator component output (502) connected with the output tube (212) of the low energy explosive transfer adapter (200);
the shear pin is configured to mechanically fail at a threshold force, thereby releasing the firing pin in response to a low energy explosive transfer line input signal;
the firing pin being located between the low energy explosive transfer line and the primer; and
ignition of the low energy explosive transfer line, by the low energy explosive transfer line input signal, advances the firing pin to impact the primer.

2. The explosive transfer assembly of claim 1, wherein the adapter housing (202) comprises an adapter aperture (214) for receiving the shear pin (304), the shear pin (304) being configured to be inserted into a shear pin groove (110) of the firing pin (100) and position the firing pin (100) in the firing pin chamber (204).

3. The explosive transfer assembly of any preceding claim, wherein the low energy explosive transfer adapter (200) is configured to be directly inserted into an existing explosive signal transfer system.

4. The explosive transfer assembly of any preceding claim, wherein the low energy explosive transfer adapter (200) is configured to generate a consistent output signal regardless of variability of an input signal provided by the low energy explosive transfer line.

5. The explosive transfer assembly of claim 1, wherein the open volume chamber is configured to contain expanding gases resulting from the low energy explosive transfer line igniting.

6. The explosive transfer assembly of claim 5, wherein the primer is configured to ignite and transfer an explosive signal to the initiator component through the output tube (212).

7. The explosive transfer assembly of claim 1, wherein the low energy explosive transfer adapter (200) further comprises an adapter aperture (214) for receiving the shear pin (304), the shear pin being configured to be inserted into a shear pin groove (110) of the firing pin (100) and position the firing pin (100) in the firing pin chamber (204).

8. The explosive transfer assembly of any of claims 1, or 5 to 7, wherein the low energy explosive transfer adapter (200) is configured to be threaded to the low energy input component and the initiator component.

9. A method of transferring a low energy explosive signal using the explosive transfer assembly of any preceding claim, comprising:
inserting the firing pin (100) into the low energy explosive transfer adapter (200);
inserting the shear pin through the low energy explosive transfer adapter to fix the firing pin relative to the low energy explosive transfer adapter;
coupling the low energy explosive transfer adapter (200) to the low energy input 2. component (400);
coupling the low energy explosive transfer adapter (200) to the initiator component (500); and
inserting the low energy explosive transfer line (414) into the low energy input component.

10. The method of claim 9, further comprising igniting the low energy explosive transfer line and impacting a primer with the firing pin (100).

11. The method of claim 9, further comprising placing an O-ring (302) into an O-ring groove on the firing pin (100).

12. The method of claim 9, further comprising inserting the primer into the primer chamber (210) of the low energy explosive transfer adapter (200).

## Patentansprüche

1. Sprengstoffübertragungsbaugruppe, umfassend:
einen Niedrigenergie-Sprengstoffübertragungsadapter (200), der ein Adaptergehäuse (202) umfasst, das wiederum Folgendes umfasst;
eine Zündstiftkammer (204), die innerhalb des Adaptergehäuses (202) angeordnet ist und einen Einlass und eine Anschlagfläche (208) gegenüber dem Einlass (206) umfasst;
eine Zündkammer (210), die mit der Zündstiftkammer (204) verbunden ist; und
ein Ausgangsrohr (212), das mit der Zündkammer (210) verbunden ist;
einen Zündstift (100), der innerhalb der Zündstiftkammer (204) angeordnet und relativ zu dieser über einen Scherstift (304) befestigt ist;
einen Zünder (300), der innerhalb der Zündkammer (210) angeordnet ist;
**dadurch gekennzeichnet, dass** die Sprengstoffübertragungsbaugruppe ferner Folgendes umfasst:
eine Niedrigenergie-Eingangskomponente (400), die an den Niedrigenergie-Sprengstoffübertragungsadapter (200) gekoppelt ist, wobei die Niedrigenergie-Eingangskomponente (400) ein Eingangskomponentengehäuse (402) umfasst, das einen ersten kegelstumpfförmigen Bereich (404), der zu einem Eingangsrohr (406) führt, einen zweiten kegelstumpfförmigen Bereich (408), der zu einem Übergangsrohr (410) führt, und eine offene Volumenkammer (412) umfasst, wobei das Übergangsrohr (410) zwischen dem Eingangsrohr (406) und der offenen Volumenkammer (412) angeordnet ist, wobei ein Innendurchmesser des Eingangsrohrs (406) größer als ein Innendurchmesser des Übergangsrohrs (410) ist, wobei ein Innendurchmesser der offenen Volumenkammer (412) größer als der Innendurchmesser des Übergangsrohrs (410) ist, und
wobei die offene Volumenkammer (412) zwischen dem Übergangsrohr (410) und dem Zündstift (100) angeordnet ist; und
eine Niedrigenergie-Sprengstoffübertragungsleitung (414), die sich durch das Eingangsrohr (406) erstreckt und innerhalb des Übergangsrohrs (410) der Niedrigenergie-Eingangskomponente (400) endet;
eine Auslöserkomponente (500), die an den Niedrigenergie-Sprengstoffübertragungsadapter (200) gekoppelt ist und einen Auslöserkomponentenausgang (502) umfasst, der mit dem Ausgangsrohr (212) des Niedrigenergie-Sprengstoffübertragungsadapter (200) verbunden ist;
wobei der Scherstift dazu konfiguriert ist, bei einer Schwellenkraft mechanisch zu versagen, wodurch der Zündstift als Reaktion auf ein Niedrigenergie-Sprengstoffübertragungsleitung-Eingangssignal gelöst wird;
wobei sich der Zündstift zwischen der Niedrigenergie-Sprengstoffübertragungsleitung und dem Zünder befindet; und
wobei die Zündung der Niedrigenergie-Sprengstoffübertragungsleitung den Zündstift durch das Niedrigenergie-SprengstoffÜbertragungsleitung-Eingangssignal nach vorne befördert, um den Zünder zu rammen.

2. Sprengstoffübertragungsbaugruppe nach Anspruch 1, wobei das Adaptergehäuse (202) eine Adapteröffnung (214) zum Aufnehmen des Scherstifts (304) umfasst, wobei der Scherstift (304) dazu konfiguriert ist, in eine Scherstiftnut (110) des Zündstifts (100) eingeführt zu werden und den Zündstift (100) in der Zündstiftkammer (204) zu positionieren.

3. Sprengstoffübertragungsbaugruppe nach einem der vorhergehenden Ansprüche, wobei der Niedrigenergie-Sprengstoffübertragungsadapter (200) dazu konfiguriert ist, direkt in ein bestehendes Sprengstoffsignalübertragungssystem eingeführt zu werden.

4. Sprengstoffübertragungsbaugruppe nach einem der vorhergehenden Ansprüche, wobei der Niedrigenergie-Sprengstoffübertragungsadapter (200) dazu konfiguriert ist, ein gleichbleibendes Ausgangssignal zu erzeugen, unabhängig von der Variabilität eines Eingangssignals, das durch die Niedrigenergie-Sprengstoffübertragungsleitung bereitgestellt wird.

5. Sprengstoffübertragungsbaugruppe nach Anspruch 1, wobei die offene Volumenkammer dazu konfiguriert ist, expandierende Gase zu enthalten, die daraus resultieren, dass die Niedrigenergie-Sprengstoffübertragungsleitung zündet.

6. Sprengstoffübertragungsbaugruppe nach Anspruch 5, wobei der Zünder dazu konfiguriert ist, zu zünden und ein Sprengstoffsignal durch das Ausgangsrohr (212) an die Auslöserkomponente zu übertragen.

7. Sprengstoffübertragungsbaugruppe nach Anspruch 1, wobei der Niedrigenergie-Sprengstoffübertragungsadapter (200) ferner eine Adapteröffnung (214) zum Aufnehmen des Scherstifts (304) umfasst, wobei der Scherstift dazu konfiguriert ist, in eine Scherstiftnut (110) des Zündstifts (100) eingeführt zu werden und den Zündstift (100) in der Zündstiftkammer (204) zu positionieren.

8. Sprengstoffübertragungsbaugruppe nach einem der Ansprüche 1, oder 5 bis 7, wobei der wobei der Niedrigenergie-Sprengstoffübertragungsadapter (200) dazu konfiguriert ist, mit einem Gewinde auf der Niedrigenergie-Eingabekomponente und der Auslöserkomponente aufgebracht zu werden.

9. Verfahren zum Übertragen eines Niedrigenergie-Sprengstoffsignals unter Verwendung der Sprengstoffübertragungsbaugruppe nach einem der vorhergehenden Ansprüche, umfassend:
Einführen des Zündstifts (100) in den Niedrigenergie-Sprengstoffübertragungsadapter (200),
Einführen des Scherstifts durch den Niedrigenergie-Sprengstoffübertragungsadapter, um den Zündstift relativ zu dem Niedrigenergie-Sprengstoffübertragungsadapter zu befestigen;
Koppeln des Niedrigenergie-Sprengstoffübertragungsadapters (200) an die Niedrigenergie-Eingabekomponente (400);
Koppeln des Niedrigenergie-Sprengstoffübertragungsadapters (200) die Auslöserkomponente (500);
und
Einführen der Niedrigenergie-Sprengstoffübertragungsleitung (414) in die Niedrigenergie-Eingangskomponente.

10. Verfahren nach Anspruch 9, ferner umfassend Zünden der Niedrigenergie-Sprengstoffübertragungsleitung und Rammen des Zünders mit dem Zündstift (100).

11. Verfahren nach Anspruch 9, ferner umfassend Platzieren eines O-Rings (302) in eine O-Ring-Nut an dem Zündstift (100).

12. Verfahren nach Anspruch 9, ferner umfassend Einführen des Zünders in die Zündkammer (210) des Niedrigenergie-Sprengstoffübertragungsadapters (200).

## Revendications

1. Ensemble de transfert d'explosifs, comprenant :
un adaptateur de transfert d'explosif à faible énergie (200) comprenant un boîtier d'adaptateur (202), qui à son tour comprend ;
une chambre de percuteur (204) située à l'intérieur du boîtier d'adaptateur (202) comprenant une entrée et une surface d'arrêt (208) opposée à l'entrée (206) ;
une chambre d'amorce (210) reliée à la chambre de percuteur (204) ; et
un tube de sortie (212) relié à la chambre d'amorce (210) ;
un percuteur (100) disposé à l'intérieur et fixé par rapport à la chambre de percuteur (204) par l'intermédiaire d'une goupille de cisaillement (304) ;
une amorce (300) disposée à l'intérieur de la chambre d'amorce (210) ;
**caractérisé en ce que** l'ensemble de transfert d'explosif comprend en outre :
un composant d'entrée à faible énergie (400) couplé à l'adaptateur de transfert d'explosif à faible énergie (200), dans lequel le composant d'entrée à faible énergie (400) comprend un boîtier de composant d'entrée (402) comprenant une première zone tronconique (404) menant à un tube d'entrée (406), une seconde zone tronconique (408) menant à un tube de transition (410), et une chambre à volume ouvert (412), dans lequel le tube de transition (410) est disposé entre le tube d'entrée (406) et la chambre à volume ouvert (412), dans lequel un diamètre intérieur du tube d'entrée (406) est plus grand qu'un diamètre intérieur du tube de transition (410), dans lequel un diamètre intérieur de la chambre à volume ouvert (412) est plus grand que le diamètre intérieur du tube de transition (410), et
dans lequel la chambre à volume ouvert (412) est disposée entre le tube de transition (410) et le percuteur (100) ; et
une ligne de transfert d'explosif à faible énergie (414) qui se prolonge à travers le tube d'entrée (406) et se termine à l'intérieur du tube de transition (410) du composant d'entrée à faible énergie (400) ;
un composant d'initiateur (500) couplé à l'adaptateur de transfert d'explosif à faible énergie (200) et comprenant une sortie de composant d'initiateur (502) reliée au tube de sortie (212) de l'adaptateur de transfert d'explosif à faible énergie (200) ;
la goupille de cisaillement est configurée pour subir une défaillance mécanique à une force de seuil, libérant ainsi le percuteur en réponse à un signal d'entrée de ligne de transfert d'explosif à faible énergie ;
le percuteur étant situé entre la ligne de transfert d'explosif à faible énergie et l'amorce ; et
l'allumage de la ligne de transfert d'explosif à faible énergie, par le signal d'entrée de la ligne de transfert d'explosif à faible énergie, fait avancer le percuteur pour exercer un impact sur l'amorce.

2. Ensemble de transfert d'explosif selon la revendication 1, dans lequel le boîtier d'adaptateur (202) comprend une ouverture d'adaptateur (214) pour recevoir la goupille de cisaillement (304), la goupille de cisaillement (304) étant configurée pour être insérée dans une rainure de goupille de cisaillement (110) du percuteur (100) et positionner le percuteur (100) dans la chambre de percuteur (204).

3. Ensemble de transfert d'explosif selon une quelconque revendication précédente, dans lequel l'adaptateur de transfert d'explosif à faible énergie (200) est configuré pour être directement inséré dans un système de transfert de signal d'explosif existant.

4. Ensemble de transfert d'explosif selon une quelconque revendication précédente, dans lequel l'adaptateur de transfert d'explosif à faible énergie (200) est configuré pour générer un signal de sortie cohérent quelle que soit la variabilité d'un signal d'entrée fourni par la ligne de transfert d'explosif à faible énergie.

5. Ensemble de transfert d'explosif selon la revendication 1, dans lequel la chambre à volume ouvert est configurée pour contenir des gaz en expansion résultant de l'allumage de la ligne de transfert d'explosif à faible énergie.

6. Ensemble de transfert d'explosif selon la revendication 5, dans lequel l'amorce est configurée pour allumer et transférer un signal explosif au composant d'initiateur à travers le tube de sortie (212).

7. Ensemble de transfert d'explosif selon la revendication 1, dans lequel l'adaptateur de transfert d'explosif à faible énergie (200) comprend en outre une ouverture d'adaptateur (214) pour recevoir la goupille de cisaillement (304), la goupille de cisaillement étant configurée pour être insérée dans une rainure de goupille de cisaillement (110) du percuteur (100) et positionner le percuteur (100) dans la chambre de percuteur (204) .

8. Ensemble de transfert d'explosif selon une l'une quelconque des revendications 1, ou 5 à 7, dans lequel l'adaptateur de transfert d'explosif à faible énergie (200) est configuré pour être fileté au composant à faible énergie et au composant d'initiateur.

9. Procédé de transfert d'un signal explosif à faible énergie à l'aide de l'ensemble de transfert d'explosif selon une quelconque revendication précédente, comprenant :
l'insertion du percuteur (100) dans l'adaptateur de transfert d'explosif à faible énergie (200) ;
l'insertion de la goupille de cisaillement à travers l'adaptateur de transfert d'explosif à faible énergie pour fixer le percuteur par rapport à l'adaptateur de transfert d'explosif à faible énergie ;
l'accouplement de l'adaptateur de transfert d'explosif à faible énergie (200) au composant d'entrée à faible énergie (400) ;
l'accouplement de l'adaptateur de transfert d'explosif à faible énergie (200) au composant d'initiateur (500) ;
et
l'insertion de la ligne de transfert d'explosif à faible énergie (414) dans le composant d'entrée à faible énergie.

10. Procédé selon la revendication 9, comprenant en outre l'allumage de la ligne de transfert d'explosif à faible énergie et le fait d'exercer un impact sur une amorce avec le percuteur (100) .

11. Procédé selon la revendication 9, comprenant en outre le placement d'un joint torique (302) dans une rainure de joint torique sur le percuteur (100).

12. Procédé selon la revendication 9, comprenant en outre l'insertion de l'amorce dans la chambre d'amorce (210) de l'adaptateur de transfert d'explosif à faible énergie (200).
